# EUROPÄISCHE PATENTSCHRIFT

(11) **EP 3 620 653 B1**
(45) Veröffentlichungstag und Bekanntmachung des Hinweises auf die Patenterteilung: **02.12.2020**
(21) Anmeldenummer: 18192647.8
(22) Anmeldetag: 05.09.2018
(51) Int. Cl.: F03D 80/80, F03D 1/06

(54) **VORRICHTUNG FÜR EINE KABELFÜHRUNG VON KABELN ZWISCHEN ROTORNABE UND EINEM ROTORBLATT EINER WINDENERGIEANLAGE**
DEVICE FOR A CABLE GUIDE OF CABLES BETWEEN ROTOR HUB AND A ROTOR BLADE OF A WIND POWER INSTALLATION
DISPOSITIF DE CHEMINEMENT DE CÂBLES ENTRE LE MOYEU DE ROTOR ET UNE PALE DE ROTOR D'UNE ÉOLIENNE

(43) Veröffentlichungstag der Anmeldung: 11.03.2020
(73) Patentinhaber: Nordex Energy GmbH, 22419 Hamburg (DE)
(72) Erfinder: Melzow, Frank, 31787 Hameln (DE); Brauch, Tobias, 18059 Rostock (DE); Winkler, Armin, 23560 Lübeck (DE)
(74) Vertreter: Garrels, Sabine

(56) Entgegenhaltungen:
- CN-A- 103 670 957
- US-B1- 9 982 659

## Beschreibung

Die vorliegende Erfindung betrifft eine Kabelführung für Kabel und Leitungen zwischen einer Rotornabe und einem Rotorblatt einer Windenergieanlage. Im Folgenden wird der Begriff Kabel verwendet.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt. In Windenergieanlagen werden zum Drehen unterschiedlicher Komponenten unterschiedliche Verstelleinrichtungen eingesetzt. Beispielsweise wird ein Pitchsystem (Rotorblattverstelleinrichtung) für den Pitchwinkel (Winkeleinstellung) der Rotorblätter der Anlage benötigt. Für die Einstellung des Pitchwinkels (Blatteinstellwinkels) werden die Rotorblätter um ihre Längsachse gedreht. Das Pitchsystem ist üblicherweise Teil einer sogenannten Pitchregelung (Blatteinstellwinkelregelung).

Das Pitchsystem ist zwischen der Rotornabe und dem Rotorblatt angeordnet. Teil des Pitchsystems ist ein Pitchlager mit einem Außenring und einem Innenring, welche drehbar zueinander gelagert sind. Die Pitchantriebe verfügen üblicherweise über einen Verstellantrieb, beispielsweise einen Elektromotor. Der Innenring ist in der Regel mit einer Verzahnung versehen, in welche das Ritzel des Verstellantriebs eingreift.

An bzw. in dem Rotorblatt sind Sensoren, z.B. für das Detektieren von Eis am Rotorblatt, angeordnet. Auch andere elektrische Komponenten, wie eine Befeuerung am Rotorblatt oder ein Anti-Icing System benötigen eine Energieversorgung. Dazu ist eine Kabelführung von flexiblen Versorgungs- und/oder Steuerleitungen von der, in Bezug zum Rotorblatt ortsfesten Rotornabe zu dem Verbraucher am bzw. im beweglichen Rotorblatt erforderlich. Das Pitchen eines Rotorblattes erfolgt in der Regel in einem Winkelbereich von 0° bis 90°. Dabei ist für die Kabelführung die Drehbewegung des Rotorblattes ein Problem.

Bisher wurde mit Hilfe eines Schleppkettensystems die Kabelführung von der Rotornabe ins Rotorblatt realisiert.

Das Gebrauchsmuster DE 202012010236 U1 offenbart beispielsweise eine Energieführungskette zur Führung von Kabeln, Schläuchen oder dergleichen zwischen einem feststehenden Versorgungsanschluss und einem beweglichen Abnehmer. Die Energieführungskette umfasst eine Vielzahl von gegeneinander schwenkbaren bzw. abwinkelbaren Gliedern, welche paarweise durch eine Gelenkverbindung miteinander verbunden sind. Längs der Energieführungskette verläuft eine Spann- bzw. Tragvorrichtung. Die Glieder sind durch Querstege miteinander verbunden.

Ähnliche Lösungen werden in den Veröffentlichungen EP 2732519 B1, EP 2812599 B1 für Leitungsführungssysteme zur Aufnahme und Führung von Versorgungsleitungen zwischen zwei in einer Kreisbewegung relativ zueinander beweglichen Anschlusspunkten offenbart.

EP 2762723 A1 beschreibt eine Kabelbündelungseinrichtung für aus der Gondel hängende im Inneren des Turms geführte Kabel, die an die Turmwandung angebunden sind. Die Kabelbündelungseinrichtung wird über mindestens zwei Spanneinrichtungen derart gehalten, dass eine Verdrehung der Kabelbündelungseinrichtung auf einen vorbestimmten Winkelbereich begrenzt ist.

In EP 2918828 A1 wird eine Kabelträgeranordnung beschrieben, welche eine Vielzahl von Energiekabelbündeln in einem oberen Bereich eines Windkraftturms trägt. Eine Vielzahl von Kabelbündelführungen mit Durchgangsöffnungen für jeweils ein Energiekabelbündel ist in einem Abstand zueinander angeordnet. Mittels eines Versatzfixiermittels wird ein Versatzabstand zwischen aufeinanderfolgenden Kabelbündelführungen eingehalten.

CN 103670957 A offenbart einen Windkraftgenerator mit einem speziellen Kabelführungsverfahren zwischen dem Rotorblatt und der Nabe, wobei das Kabel zwischen dem Rotorblatt und der Nabe angeordnet und mit dem Rotorblatt über einen elastischen Teil, insbesondere eine Feder, verbunden ist. Das Kabel ist fest und gekrümmt auf der Feder angeordnet. Das Problem der Kabelführung zwischen dem sich drehenden Rotorblatt und der relativ stationären Nabe wird dadurch gelöst, dass das Kabel auf der Feder in gekrümmter Form fest angeordnet ist und eine minimale Torsion in der Gerätelänge erzeugt werden kann.

### Darstellung der Erfindung

Der Erfindung liegt die Aufgabe zugrunde, eine Vorrichtung bereitzustellen, die mit einfachen Mitteln eine zuverlässige und schonende Führung der Kabel von der Rotornabe in das um seine Längsachse drehbare Rotorblatt einer Windenergieanlage gestattet, wobei ein Pitchen des Rotorblattes nicht behindert und eine zuverlässige Energieversorgung der elektrischen Komponenten in bzw. am Rotorblatt gewährleistet werden soll.

Die Lösung der Aufgabe erfolgt mit den Merkmalen der Patentansprüche.

Die erfindungsgemäße Kabelführung für Kabel ist zwischen einer Rotornabe und einem um seine Längsachse drehbaren Rotorblatt einer Windenergieanlage angeordnet. Die Rotornabe umfasst eine Konsole und das Rotorblatt einen Blattboden. Die Kabelführung ist mittig zentriert zwischen der Konsole und dem Blattboden angeordnet und besteht aus einer Kabelleiter. Die Kabelleiter ist dadurch gekennzeichnet, dass sie über Konsolen-Befestigungsmittel mit der Konsole elastisch verbunden und mittels Blattboden-Befestigungsmitteln mit dem Blattboden fest verbunden ist.

Die Kabelleiter besteht aus zwei parallel verlaufenden Stahlseilen, zwischen welchen Sprossen in gleichmäßigen Abständen angeordnet sind.

Für eine weitere wesentliche Ausführung besteht das Konsolen-Befestigungsmittel für eine Befestigung an der Konsole aus mehreren Teilen:
aus einem Bolzen, welcher unterhalb der Konsole angeordnet ist,
einer Anschlagöse, welche oberhalb der Konsole angeordnet ist, und
einer Feder, durch welche der Bolzen unterhalb der Konsole geführt ist,
wobei die Anschlagöse mit dem Bolzen fest verbunden ist.

Für eine weitere wesentliche Ausführung ist die Kabelleiter an nur einem Stahlseil mit dem Konsolen-Befestigungsmittel elastisch verbunden oder die Kabelleiter ist an beiden Stahlseilen mit dem Konsolen-Befestigungsmittel elastisch verbunden.

Für eine weitere Ausführung ist das Befestigungsmittel für eine Blattboden-Befestigung mit dem Blattboden fest mit diesem verbunden. Als Blattboden-Befestigungsmittel können hier Anschlagösen oder Schäkel zur Anwendung kommen.

Für eine weitere Ausführung sind die Kabel mit Haltemitteln an den Sprossen in dafür vorgesehenen Befestigungslöchern fixiert. Als Haltemittel können Kabelbinder, Kabelschellen o.ä. verwendet werden.

Der Vorteil der Erfindung liegt in darin, dass die Kabelführung einfach und kostengünstig ist. Die Vorrichtung zur Kabelführung kann überall dort angewendet werden, wo Kabel von einem drehfesten Ort in ein begrenzt rotierendes System geführt werden müssen.

### Ausführung der Erfindung

Die Erfindung wird anhand eines Ausführungsbeispiels erläutert. Hierzu zeigen
- Figur 1: eine schematische Darstellung einer Windenergieanlage,
- Figur 2: eine schematisch Darstellung der Rotornabe mit dem mit ihr verbundenen Rotorblatt,
- Figur 3: eine schematische Darstellung der Konsole der Rotornabe,
- Figur 4: einen Ausschnitt der Konsole mit einer schematischen Darstellung der Befestigung der erfindungsgemäßen Vorrichtung.

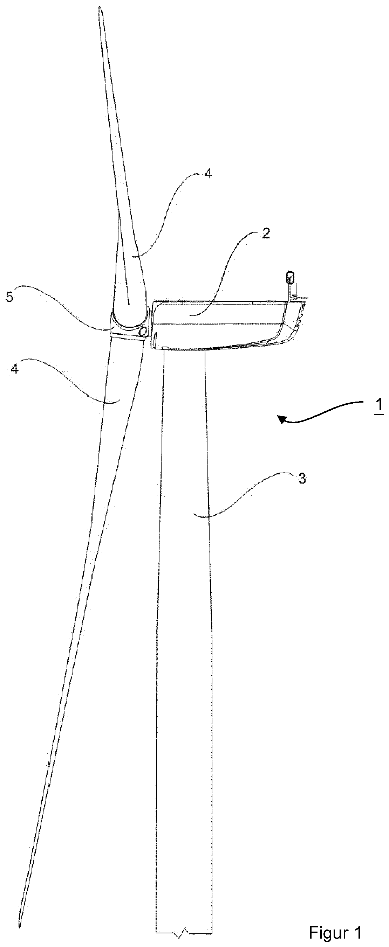

Figur 1 zeigt eine schematische Darstellung einer Windenergieanlage 1, welche aus einem Turm 3 und einer drehbar auf dem Turmkopf gelagerten Gondel 2 besteht. Die Gondel 2 ist mit einer Rotornabe 5 verbunden, die ihrerseits mit beispielsweise drei Rotorblättern 4 verbunden ist. Die erfindungsgemäße Kabelführung 6 für Kabel 64 von der Rotornabe ins Rotorblatt der Windenergieanlage 1 trägt die Signal- und Leistungskabel für die erwähnten Sensoren. Wie weiter oben auch erwähnt, stellt die Kabelführung 6 von flexiblen Versorgungs- und/oder Steuerleitungen an der Schnittstelle zwischen der Rotornabe 5 und dem Rotorblatt 4 ein Problem dar, da das Rotorblatt 4 in Bezug die ortsfeste Rotornabe 5 gedreht wird. Das Pitchen eines Rotorblattes erfolgt in der Regel in einem Winkelbereich von 0° bis 90°. Die Kabelführung 6 muss so gestaltet sein, dass die Drehbewegung des Rotorblattes 4 zu keinen Beschädigungen an den Kabeln 64 führt.

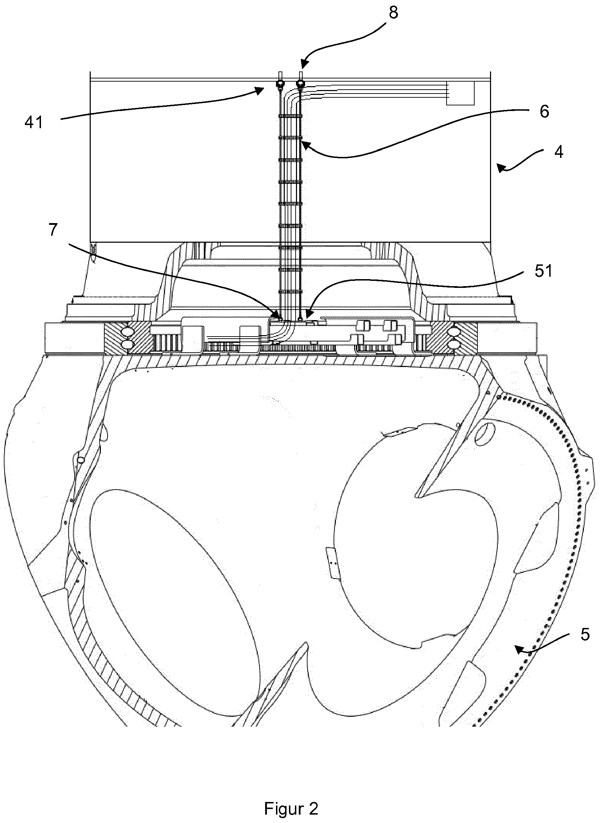

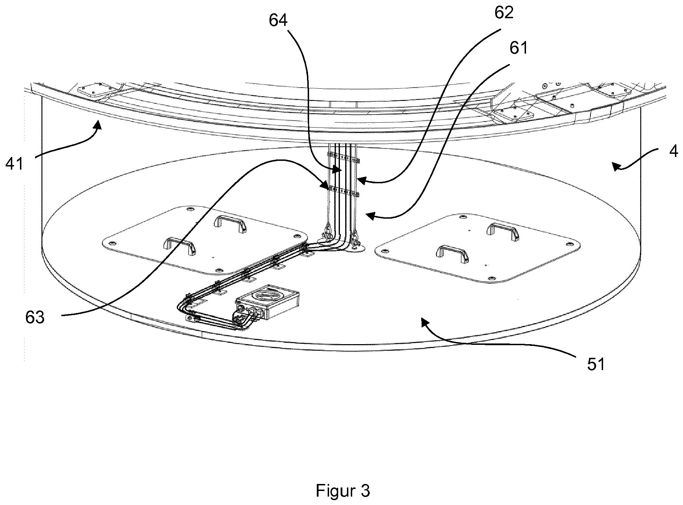

Figur 2 zeigt schematisch die Rotornabe 5 mit dem mit ihr verbundenen Rotorblatt 4. Die Kabelführung 6 ist mittig zentriert zwischen der Konsole 51 der Rotornabe 5 und dem Blattboden 41 des Rotorblattes 4 angeordnet. Figur 3 zeigt schematisch die Konsole 51. Die Kabelführung 6 besteht aus einer Kabelleiter 61, welche mittels Konsolen-Befestigungsmitteln 7 mit der Konsole 51 und mittels Blattboden-Befestigungsmitteln 8 mit dem Blattboden 41 verbunden sind. Die Kabelleiter 61 setzt sich aus zwei parallel verlaufenden Stahlseilen 62, zwischen welchen Sprossen 63 aus Blech oder Flachstahl in gleichmäßigen Abständen angeordnet sind, zusammen. Die Sprossen 63 sind mittels Drahtseilklemmen an den Stahlseilen 62 befestigt. Die Kabel 64 werden mit Haltemitteln, hier nicht weiter dargestellte Kabelbinder, an den Sprossen 63 in dafür vorgesehenen Befestigungslöchern fixiert.

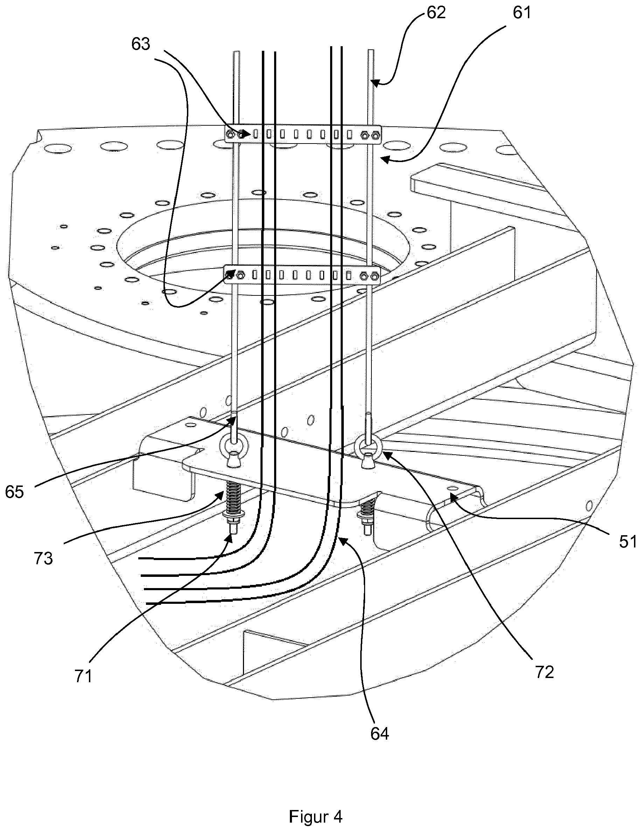

In Figur 4 ist ein Ausschnitt der Konsole 51 dargestellt. Weiterhin ist die Befestigung der erfindungsgemäßen Vorrichtung an der Konsole 51 zu sehen. Die Stahlseile 62 der Kabelleiter 61 sind jeweils durch die Konsolen-Befestigungsmittel 7 mit der Konsole 51 verbunden. Ein Konsolen-Befestigungsmittel 7 für die Befestigung an der Konsole 51 besteht aus einem Bolzen 71 unterhalb der Konsole 51, einer Anschlagöse 72 oberhalb der Konsole 51 und einer Feder 73, durch welche der Bolzen 71 unterhalb der Konsole 51 geführt wird. Die Anschlagöse 72 ist mit dem Bolzen 71 fest verbunden. Das Stahlseil 62 wird durch die Anschlagöse 72 geführt und mittels einer Kausche 65 und Kabelklemmen in der Anschlagöse 72 gehalten. Durch diese Anordnung - Stahlseil 62, Anschlagöse 72, Bolzen 71 mit Feder 73 - ist das Stahlseil 62 mittels der Feder 73 elastisch aufgehängt, wodurch sich eine gewisse Dehnung der Kabelleiter 61 einstellen kann, wenn das Rotorblatt 4 gepitcht wird und die Kabelleiter 61 einer Torsion unterliegt. Außerdem ist das beschriebene Konsolen-Befestigungsmittel 7 sehr sicher, da das ganze System nicht aus der Konsole 51 gerissen werden kann, was durch den Bolzen 71 verhindert wird. Es ist möglich, dass die Feder 73 lediglich an einem Stahlseil 62 angeordnet ist, da die Torsion bei einer Drehung des Rotorblattes 4 um höchstens 90° nicht so groß ist. Sollte allerdings der Abstand zwischen Blattboden 41 und Konsole 51 klein sein, beispielsweise, wenn kein Extender angeordnet ist, kann das beschriebene Konsolen-Befestigungsmittel 7 auch an beiden Stahlseilen 62 der Kabelleiter 61 angebracht sein.

Nicht dargestellt ist die Befestigung der Kabelleiter 61 am Blattboden 41, welcher in der Regel aus GFK besteht. Diese Befestigung erfolgt über die Blattboden-Befestigungsmittel 8, welche mit dem Blattboden 41 fest verbunden sind. So können beispielsweise Anschlagösen oder Schäkel mit dem Blattboden 41 fest verbunden sein, wobei die Stahlseile 62 durch die Anschlagösen geführt und mittels Kauschen und Kabelklemmen in den Anschlagösen gehalten werden.

Da es sich bei der vorhergehenden, detailliert beschriebenen Kabelführung 6 für Kabel 64 von einer Rotornabe 5 in ein Rotorblatt 4 einer Windenergieanlage 1 um ein Ausführungsbeispiel handelt, kann sie in üblicher Weise vom Fachmann in einem weiten Umfang modifiziert werden, ohne den Bereich der Erfindung zu verlassen. Insbesondere kann die konkrete Ausgestaltung der Kabelleiter 61 in anderer Form als in der hier beschriebenen folgen. Ebenso können die Konsolen-Befestigungsmittel 7 und Blattboden-Befestigungsmittel 8 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- 1: Windenergieanlage
- 2: Gondel
- 3: Turm
- 4: Rotorblatt
41 Blattboden eines Rotorblattes 4
- 5: Rotornabe
51 Konsole der Rotornabe 5
- 6: Kabelführung
61 Kabelleiter
62 Stahlseile
63 Sprossen
64 Kabel
65 Kausche
- 7: Konsolen-Befestigungsmittel an der Konsole 51
71 Bolzen
72 Anschlagöse
73 Feder
- 8: Blattboden-Befestigungsmittel am Blattboden 41

## Patentansprüche

1. Kabelführung (6) für Kabel (64) zwischen einer Rotornabe (5) und einem um seine Längsachse drehbaren Rotorblatt (4) einer Windenergieanlage (1), wobei die Rotornabe (5) eine Konsole (51) und das Rotorblatt (4) einen Blattboden (41) umfassen, wobei die Kabelführung (6) aus einer Kabelleiter (61) besteht und dazu ausgebildet ist mittig zentriert zwischen der Konsole (51) und dem Blattboden (41) angeordnet zu sein, **dadurch gekennzeichnet, dass** die Kabelleiter (61) ferner dazu ausgebildet ist, über Konsolen-Befestigungsmittel (7) mit der Konsole (51) elastisch verbunden zu sein und mittels Blattboden-Befestigungsmittel (8) mit dem Blattboden (41) fest verbunden zu sein.

2. Vorrichtung nach Anspruch 1 **dadurch gekennzeichnet, dass** die Kabelleiter (61) aus zwei parallel verlaufenden Stahlseilen (62) besteht, zwischen welchen Sprossen (63) in gleichmäßigen Abständen angeordnet sind.

3. Vorrichtung nach Anspruch 1 **dadurch gekennzeichnet, dass** das Konsolen-Befestigungsmittel (7) für eine Befestigung an der Konsole (51) aus einem Bolzen (71), welcher unterhalb der Konsole (51) angeordnet ist, einer Anschlagöse (72), welche oberhalb der Konsole (51) angeordnet ist, und einer Feder (73), durch welche der Bolzen (71) unterhalb der Konsole (51) geführt ist, besteht, wobei die Anschlagöse (72) mit dem Bolzen (71) fest verbunden ist.

4. Vorrichtung nach einem der Ansprüche 1 bis 3 **dadurch gekennzeichnet, dass** die Kabelleiter (61) an nur einem Stahlseil (62) mit dem Konsolen-Befestigungsmittel (7) elastisch verbunden ist.

5. Vorrichtung nach einem der Ansprüche 1 bis 3 **dadurch gekennzeichnet, dass** die Kabelleiter (61) an beiden Stahlseilen (62) mit dem Konsolen-Befestigungsmittel (7) elastisch verbunden ist.

6. Vorrichtung nach Anspruch 1 **dadurch gekennzeichnet, dass** das Blattboden-Befestigungsmittel (8) für eine Befestigung mit dem Blattboden (41) fest mit diesem verbunden ist.

7. Vorrichtung nach Anspruch 6 **dadurch gekennzeichnet, dass** das Blattboden-Befestigungsmittel (8) für eine Befestigung mit dem Blattboden (41) Anschlagösen oder Schäkel sind.

8. Vorrichtung nach Anspruch 2 **dadurch gekennzeichnet, dass** die Kabel (64) mit Haltemitteln an den Sprossen (63) in dafür vorgesehenen Befestigungslöchern fixiert sind.

## Claims

1. Cable guide (6) for cables (64) between a rotor hub (5) and a rotor blade (4), which is rotatable about its longitudinal axis, of a wind turbine (1), the rotor hub (5) comprising a bracket (51) and the rotor blade (4) comprising a blade base (41), wherein the cable guide (6) is composed of a cable ladder (61) and is configured to be arranged centred in the middle between the bracket (51) and the blade base (41),
**characterized in that** the cable ladder (61) is further configured to be connected elastically via bracket fastening means (7) to the bracket (51) and to be connected fixedly by means of blade base fastening means (8) to the blade base (41).

2. Device according to Claim 1, **characterized in that** the cable ladder (61) is composed of two steel cables (62) which run in parallel and between which rungs (63) are arranged at even distances.

3. Device according to Claim 1, **characterized in that** the bracket fastening means (7) for a fastening to the bracket (51) comprise a bolt (71), which is arranged below the bracket (51), a lifting eye (72), which is arranged above the bracket (51), and a spring (73), by which the bolt (71) is guided below the bracket (51), the lifting eye (72) being connected fixedly to the bolt (71) .

4. Device according to any one of Claims 1 to 3, **characterized in that** the cable ladder (61) is connected elastically on only one steel cable (62) to the bracket fastening means (7).

5. Device according to any one of Claims 1 to 3, **characterized in that** the cable ladder (61) is connected elastically on both steel cables (62) to the bracket fastening means (7).

6. Device according to Claim 1, **characterized in that** the blade base fastening means (8) for a fastening to the blade base (41) is connected fixedly thereto.

7. Device according to Claim 6, **characterized in that** the blade base fastening means (8) for a fastening to the blade base (41) are lifting eyes or shackles.

8. Device according to Claim 2, **characterized in that** the cables (64) are fixed with holding means on the rungs (63) in fastening holes provided for this purpose.

## Revendications

1. Guide-câbles (6) pour des câbles (64) entre un moyeu de rotor (5) et une pale de rotor (4) d'un aérogénérateur (1) pouvant tourner autour de son axe longitudinal, le moyeu de rotor (5) comportant une console (51) et la pale de rotor (4) comportant un fond de pale (41), le guide-câbles (6) se composant d'un conducteur de câble (61) et étant configuré pour être disposé centré au milieu entre la console (51) et le fond de pale (41), **caractérisé en ce que** le conducteur de câble (61) est en outre configuré pour être relié élastiquement à la console (51) par le biais de moyens de fixation de console (7) et pour être relié de manière fixe au fond de pale (41) à l'aide de moyens de fixation de fond de pale (8).

2. Dispositif selon la revendication 1, **caractérisé en ce que** le conducteur de câble (61) se compose de deux cordons en acier (62) suivant un tracé parallèle entre lesquels sont disposés des barreaux (63) à intervalles réguliers.

3. Dispositif selon la revendication 1, **caractérisé en ce que** les moyens de fixation de console (7), pour une fixation de la console (51), se composent d'un goujon (71), qui est disposé au-dessous de la console (51), d'un œillet d'accrochage (72), qui est disposé au-dessus de la console (51), et d'un ressort (73), à travers lequel est guidé le goujon (71) au-dessous de la console (51), l'œillet d'accrochage (72) étant relié à demeure au goujon (71).

4. Dispositif selon l'une des revendications 1 à 3, **caractérisé en ce que** le conducteur de câble (61) est relié élastiquement aux moyens de fixation de console (7) par un seul cordon en acier (62).

5. Dispositif selon l'une des revendications 1 à 3, **caractérisé en ce que** le conducteur de câble (61) est relié élastiquement aux moyens de fixation de console (7) par les deux cordons en acier (62).

6. Dispositif selon la revendication 1, **caractérisé en ce que** les moyens de fixation de fond de pale (8), pour une fixation au fond de pale (41), sont reliés de manière fixe à celui-ci.

7. Dispositif selon la revendication 6, **caractérisé en ce que** les moyens de fixation de fond de pale (8), pour une fixation au fond de pale (41), sont des œillets d'accrochage ou des manilles.

8. Dispositif selon la revendication 2, **caractérisé en ce que** les câbles (64) sont calés au niveau des barreaux (63) avec des moyens de maintien dans des trous de fixation conçus à cet effet.
